# EUROPEAN PATENT APPLICATION

(11) **EP 4 071 438 A1**
(43) Date of publication of application: **12.10.2022**
(21) Application number: 22165831.3
(22) Date of filing: 31.03.2022
(51) Int. Cl.: G01B 9/02015

(54) **OPTICAL INTERFEROMETER WITH CONICAL AND CYLINDRICAL REFLECTING SURFACE**

(30) Priority: 07.04.2021 SK 432021 U
(71) Applicant: Zilinská Univerzita V Ziline, 010 26 Zilina (SK)
(72) Inventor: MARTIN EK, Ivan, 010 01 ilina (SK); GORAUS, Matej, 038 35 Val a (SK)
(74) Representative: Zovicova, Viera

(57) **Abstract**

An optical interferometer which, in addition to an input planar incident surface (1) and an output planar incident surface (6), includes a conical reflecting surface (2) and a cylindrical reflecting surface (4), is an optical device which can form a radial light beam from a linear light beam and a linear light beam again from a radial light beam. In the radial light beam, a phase shift between the beams of the radial light beam occurs and therefore interference phenomena can be observed in the output light beam coming out of the interferometer. This type of interferometer can be used in measurement technology and its miniature versions can be used in sensing technology in the production of microsensors for the measurement of various physical quantities.

## Description

### Technical Field

The present invention relates to a design of an optical interferometer, which comprises a conical and a cylindrical reflecting surface. The field of technology covered by the invention is measurement technology and sensing technology.

### Background Art

Optical interferometers are devices that can be used to combine light beams in such a way that a physical phenomenon called light interference can be observed. In optical interferometers, a beam of light, which usually emanates from a single optical source, is first split into two or more beams of light that propagate along different paths, and after passing through certain paths, the split beams of light are recombined, with interference of light occurring when the split beams of light are added together.

The interference of light beams results in an interference optical field with an intensity that is greater, lower or equal to the intensity of the individual interfering light beams. The resulting interference field provides information about the difference in the lengths of the optical paths travelled by the individual interfering beams of light.

There are several types of interferometers that are used to create interfering light beams, such as the Michelson interferometer, Mach-Zehnder interferometer, Fabry-Perot interferometer, and alike.

A frequently used interferometer is the Michelson interferometer. The Michelson interferometer consists of a semi-transparent mirror that splits the incident beam of light emanating from the light source into two beams that propagate to the two mirrors. At the mirrors, the beams of light are reflected and return back to the semi-transparent mirror, where the beams of light reflected from the mirrors combine and then, after reflection from the semi-transparent mirror, continue to propagate to the observer, who observes the interference of the light.

Another frequently used interferometer is the Mach-Zehnder interferometer. The Mach-Zehnder interferometer consists of a first semi-permeable mirror which splits the incident beam of light emanating from the light source into two beams of light which propagate to two mirrors on which the incident beams of light are reflected to a second semi-permeable mirror on which the reflected beams of light are combined and, after passage and reflection on the second semi-permeable mirror, are propagated to two observers who observe the interference of the light.

Another type of interferometer is the Fabry-Perot interferometer, which consists of two parallel, partially reflecting, glass optical surfaces. A beam of light caught between such glass surfaces reflects many times on them, and behind them forms a system of passing beams that interfere with each other.

In these and other types of interferometers, the beam of light emanating from the source and the beams of light produced by reflections in the interferometer propagate linearly and lie in a plane.

### Summary of invention

In this context, the technical task at the basis of the present invention is to provide a new type of propagating beams whereupon a linear beam of light, which emanates from a light source and is incident on an interferometer, is split in the interferometer by means of a conical reflecting surface into a radial beam of light, which is perpendicular to the linear beam of light propagating in the interferometer. According to the invention, the optical interferometer with a conical and a cylindrical reflecting surface can create a radial beam from a linear light beam and a linear beam again from a radial one, while interference phenomena can be observed in the output light beam that comes out of the interferometer.

It is well known that when light is incident on the interface of two different optical environments, it can be fully reflected at the interface, or be partially reflected and partially refracted and transmitted from one environment to the other. The angles of incidence and angles of refraction for incident and refracted rays are governed by Snell's law.

Reflection and refraction of light at the interface of two different optical environments can be used to split a single beam of light into multiple coherent beams of light which interfere with each other when combined. It is this property of the interfaces of optical environments that is exploited by optical interferometers, which can create interfering light beams from a single input beam of light.

According to one aspect of the invention, the linear light beam propagating in the interferometer, which is characterised by parallel light beams, is divided by means of a conical reflecting surface into a radial light beam, which is characterised by radial light beams. Radial light rays lie in the plane of a circle that is centred on an axis that passes through the vertex of the conical reflecting surface perpendicular to its base.

To create a path difference between the light rays from the light beam propagating in the interferometer, the first half of the light rays from the light beam in the interferometer portion propagates at a different phase velocity than the second half of the light rays, or the first half of the light rays in the interferometer must travel a larger path than the second half of the light rays. The difference in phase velocity between the first and second half of the light rays is due to the fact that the first half of the light rays propagate in a part of the interferometer in an optical medium with a different refractive index than that of the medium in which the second half of the light rays propagate.

After splitting the linear light beam into a radial beam, the radial rays from the radial light beam fall perpendicularly onto the cylindrical reflecting surface, where they are reflected back onto the conical reflecting surface. After reflection from the conical reflecting surface, the radial light beam re-forms into a linear light beam which impinges on the interferometer's input planar incident surface, from which it is reflected to the interferometer's output planar surface, through which it exits the interferometer. Since the light beam exiting the interferometer is made up of light beams between which there is a certain path difference, interference phenomena are observed in the exiting light beam.

### Brief description of drawings

Additional features and advantages of the present invention will emerge more clearly from the approximate, and thus non-limiting, description of an embodiment of an optical interferometer, as illustrated in the appended drawing, in which:

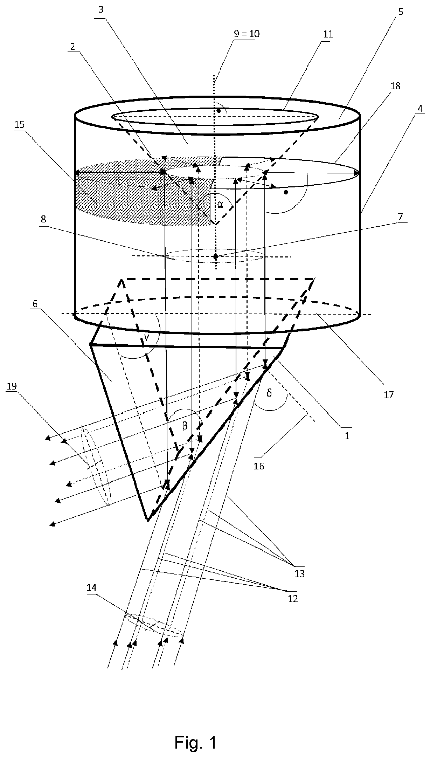

- figure 1 shows a principal oblique view of an optical interferometer with a conical and cylindrical reflecting surface.

With reference to the drawing, it serves solely to illustrate embodiment of the invention with the aim of better clarifying, in combination with the description, the inventive principles at the basis of the invention.

### Description of embodiments

The present invention is aimed at an optical interferometer comprising a conical and a cylindrical reflecting surface. Any modifications or variants which, in the light of the description, are evident to the person skilled in the art, must be considered to fall within the scope of protection established by the present invention, according to considerations of technical equivalence.

The optical interferometer with conical and cylindrical reflecting surfaces shown in figure 1 includes an input planar incident surface 1 which makes an angle β with the output planar surface 6, an output planar surface 6 which makes an angle γ with the bottom surface 17 of the cylinder of revolution, a conical reflecting surface 2 which is formed by the outer shell of the hollow cone of rotation 3, wherein at the apex of the hollow cone of rotation 3, there is the magnitude of the angle α of the axial section of the cone, further a cylindrical reflecting surface 4 which is formed by the inner shell of the cylinder of rotation 5, wherein the line 9 which passes through the apex of the hollow cone of rotation perpendicular to its base is also identical to the axis 10 of the cylinder of rotation, and the internal part 15 of the interferometer. The internal part 15 of the interferometer is formed of a different material than the rest of the interferometer.

According to one aspect of the invention, the optical interferometer which, apart from the internal part 15 of the interferometer, is made of fused quartz which has a refractive index of 1.457 at a wavelength of 632.8 nm. The internal part 15 of the interferometer is made of SF5 optical glass, which has a refractive index of 1.669 at a wavelength of 632.8 nm.

The angle γ between the output planar surface 6 and the bottom surface 17 of the cylinder of rotation is 95 degrees, the angle β between the output planar surface 6 and the input planar incident surface 1 is 42.5 degrees, and the magnitude of the angle α at the top of the axial section of the hollow cone of rotation 3 is 90 degrees.

An input linear outer beam 14 of light originating from a coherent laser source having a wavelength of 632.8 nm is incident on the input planar incident surface 1 at an angle δ equal to 80 degrees measured from the normal 16 of the input planar incident surface 1. The input linear outer beam 14 of light, which consists of the first half 12 of light rays and the second half 13 of light rays, is refracted upon impact on the input planar incident surface 1 and enters the optical interferometer as a linear inner beam 8 of light so that the centre 7 of the linear internal beam of light incident on the conical reflecting surface 2 lies on a line 9 which passes through the top of the hollow cone of rotation 3 perpendicular to the base 11 of the hollow cone of rotation. The line 9 is also identical to the axis 10 of the cylinder of rotation. A linear inner beam 8 of light formed from the first half 12 of light rays from the light beam and the second half 13 of light rays from the light beam impinges on the conical reflecting surface 2, from which it is reflected to form a radial inner beam 18 of light, which is incident perpendicularly on the cylindrical reflecting surface 4, which is formed by the inner shell of the cylinder of rotation 5, while inside the interferometer the first half 12 of the light rays from the light beam propagate through the internal part 15 of the interferometer, which is formed by the SF5 optical glass. After the light rays of the first half 12 of light rays from the light beam and the second half 13 of light rays from the light beam from the radial inner beam 18 of light are incident on the cylindrical reflecting surface 4, the light rays are reflected back to the conical reflecting surface 2, from which they are reflected to the input planar incident surface 1, whereby after the reflection from the conical reflecting surface 2, they again form the linear inner beam 8 of light. After the linear inner beam 8 of light is incident on the input planar incident surface 1, it is reflected to the output planar incident surface 6, on which it is incident perpendicularly and through which it exits the interferometer in the form of an output linear outer beam 19 of light, in which interference phenomena of light can be observed.

### Industrial applicability

Optical interferometer with conical and cylindrical reflecting surfaces can be used in measurement technology when measuring refractive indices of optical media or when measuring the length of small shifts. Miniature versions of such an interferometer can be used in sensing technology for sensing various physical quantities such as pressure, temperature, mechanical force, and the like.

### Reference signs list

1 input planar incident surface
2 conical reflecting surface
3 hollow cone of rotation
4 cylindrical reflecting surface
5 cylinder of rotation
6 output planar surface
7 the centre of the linear inner beam of light
8 linear inner beam of light
9 straight line
10 axis of the cylinder of rotation
11 base of the hollow cone of rotation
12 the first half of the light rays from the light beam
13 the second half of the light rays from the light beam
14 input linear outer beam of light
15 internal part of the interferometer
16 the normal of the input planar incident surface
17 bottom surface of the cylinder of rotation
18 radial inner beam of light
19 output linear outer beam of light

## Claims

1. An optical interferometer having a conical and a cylindrical reflecting surface **characterised in that** the optical interferometer comprises an input planar incident surface (1), a conical reflecting surface (2) formed by an outer shell of a hollow cone of rotation (3), a cylindrical reflecting surface (4) formed by an inner shell of a cylinder of rotation (5), and an output planar surface (6), wherein the centre (7) of a linear inner beam of light (8) incident on the conical reflecting surface (2) lies on a straight line (9) passing through the top of the hollow cone of rotation (3) perpendicularly to a base (11) of the hollow cone of rotation (3).

2. The optical interferometer according to claim 1, wherein the magnitude of the angle α at the apex of the axial section of the hollow cone of rotation (3) is less than 180 degrees.

3. The optical interferometer according to claim 1, wherein the axis (10) of the cylinder of rotation (5) is identical to the straight line (9).

4. The optical interferometer according to claim 1, wherein the angle β between the input planar incident surface (1) and the output planar incident surface (6) is less than 180 degrees.

5. The optical interferometer according to claim 1, wherein the optical interferometer is formed of optical polymers and/or optical glasses.
